# EUROPEAN PATENT APPLICATION

(11) **EP 4 579 433 A1**
(43) Date of publication of application: **02.07.2025**
(21) Application number: 23868515.0
(22) Date of filing: 15.09.2023
(51) Int. Cl.: G06F 3/16, G06F 3/04842, G06F 3/04847, G06F 3/04817, G06F 3/0482, H04W 4/80, G06F 3/00, G06F 3/01, H04M 1/72415

(54) **ELECTRONIC DEVICE FOR ADJUSTING AUDIO SIGNAL ASSOCIATED WITH OBJECT SHOWN THROUGH DISPLAY, AND METHOD THEREOF**

(30) Priority: 23.09.2022 KR 20220120865; 28.10.2022 KR 20220141919
(71) Applicant: Samsung Electronics Co., Ltd., Suwon-si, Gyeonggi-do 16677 (KR)
(72) Inventor: LEE, Sanghoon, Suwon-si, Gyeonggi-do 16677 (KR); KIM, Seonmi, Suwon-si, Gyeonggi-do 16677 (KR); MOON, Hangil, Suwon-si, Gyeonggi-do 16677 (KR); BANG, Kyoungho, Suwon-si, Gyeonggi-do 16677 (KR); YANG, Jaemo, Suwon-si, Gyeonggi-do 16677 (KR); HWANG, Hochul, Suwon-si, Gyeonggi-do 16677 (KR)
(74) Representative: Nederlandsch Octrooibureau
(86) International application number: PCT/KR2023/013998
(87) International publication number: WO 2024/063463

(57) **Abstract**

An electronic device according to an embodiment may comprise: a display; a camera; a speaker, a micro array comprising a plurality of microphones; and a processor. The processor may identify a position of an external object shown through the display on the basis of an image obtained by the camera. The processor may control the microphone array on the basis of the identified position and obtain an acoustic signal generated by the external object. The processor may interlock with the external within the display on the basis of the acoustic signal and display a visual object for adjusting a volume of the acoustic signal. The processor may output an audio signal associated with the acoustic signal through the speaker in response to an input received on the basis of the visual object and ensuring adjustment of the volume.

## Description

### [Technical Field]

The following descriptions relate to an electronic device for adjusting an audio signal associated with an object shown through a display, and a method thereof.

### [Background Art]

In order to provide an enhanced user experience, an electronic device that provides an augmented reality (AR) service that displays information generated by a computer in connection with an external object in the real world, a virtual reality (VR) service to provide an immersive user experience for a virtual world, and/or a mixed reality (MR) service is being developed. The electronic device may be an electronic device that may be worn by a user. For example, the electronic device may include AR glasses, and/or a head-mounted device (HMD).

### [Disclosure]

### [Technical Solution]

According to an embodiment, an electronic device may comprise a display, a camera, a speaker, a microphone array including a plurality of microphones, and a processor. The processor may identify, based on an image obtained by the camera, an external object viewable through the display. The processor may obtain, by controlling the microphone array based on a direction of the identified external object, an acoustic signal corresponding to the direction. The processor may display, based on the acoustic signal, a visual object to adjust a volume of the acoustic signal in the display based on a position of the external object identified in the image. The processor may output, in response to an input to adjust the volume received based on the visual object, an audio signal associated with the acoustic signal through the speaker.

According to an embodiment, a method of an electronic device may comprise identifying, based on an image obtained by a camera, an external object viewable through a display. The method of the electronic device may comprise obtaining, by controlling a microphone array based on a direction of the identified external object, an acoustic signal corresponding to the direction. The method of the electronic device may comprise displaying, based on the acoustic signal, a visual object to adjust a volume of the acoustic signal in the display based on a position of the external object identified in the image. The method of the electronic device may comprise outputting, in response to an input to adjust the volume received based on the visual object, an audio signal associated with the acoustic signal through a speaker.

According to an embodiment, a computer-readable storage medium storing one or more programs, wherein the one or more programs, when executed by a processor of an electronic device, may cause the processor of the electronic device to identify, based on an image obtained by a camera, an external object viewable through a display. The one or more programs, when executed by the processor of the electronic device, may cause the processor of the electronic device to obtain, by controlling a microphone array based on a direction of the identified external object, an acoustic signal corresponding to the direction. The one or more programs, when executed by the processor of the electronic device, may cause the processor of the electronic device to display, based on the acoustic signal, a visual object to adjust a volume of the acoustic signal in the display based on a position of the external object identified in the image. The one or more programs may cause the processor of the electronic device to output, in response to an input to adjust the volume received based on the visual object, an audio signal associated with the acoustic signal through a speaker.

### [Description of the Drawings]

FIG. 1 is an example of a block diagram of an electronic device in a network environment according to an embodiment.
FIG. 2 is an example of a block diagram of an electronic device according to an embodiment.
FIG. 3A is an example of a perspective view of an electronic device according to an embodiment.
FIG. 3B is an example of one or more hardware disposed in an electronic device according to an embodiment.
FIGS. 4A to 4B are an example of an exterior of an electronic device according to an embodiment.
FIG. 5A is an example of a screen displayed through a display of an electronic device according to an embodiment.
FIG. 5B is an example of a screen displayed through a display of an electronic device according to an embodiment.
FIG. 5C is an example of a screen displayed through a display of an electronic device according to an embodiment.
FIG. 6A is an example of an electronic device that adjusts a volume of an acoustic signal, according to an embodiment.
FIG. 6B is an example of an electronic device that adjusts a volume of an acoustic signal, according to an embodiment.
FIG. 7 is an example of a flowchart of an operation of an electronic device according to an embodiment.

### [Mode for Invention]

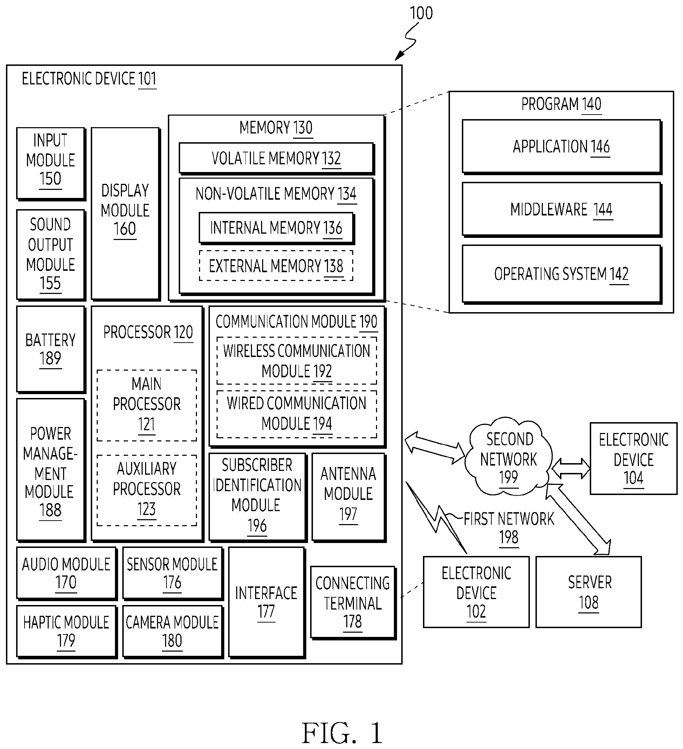

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

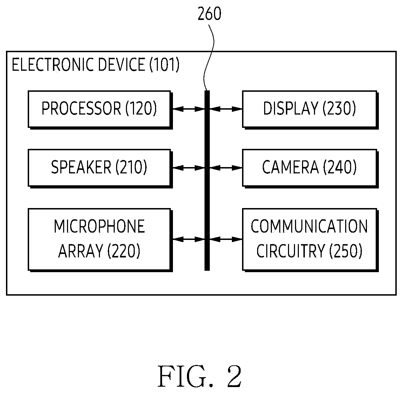

FIG. 2 is an example of a block diagram of an electronic device according to an embodiment. An electronic device 101 of FIG. 2 may be an example of the electronic device 101 of FIG. 1. A processor 120 of FIG. 2 may be an example of the processor 120 of FIG. 1. Operations of FIG. 2 may be executed by the processor 120 of FIG. 1 and/or FIG. 2. According to an embodiment, the electronic device 101 may have a form of glasses wearable to a body part (e.g., head) of a user. The electronic device 101 of FIG. 2 may include a head-mounted display (HMD). For example, a housing of the electronic device 101 may include a flexible material such as rubber and/or silicon having a shape in close contact with a portion (e.g., a portion of a face covering both eyes) of the user's head. For example, the housing of the electronic device 101 may include one or more straps that may be able to be twined around the user's head, and/or one or more temples attachable to an ear of the head.

Referring to FIG. 2, according to an embodiment, the electronic device 101 may include at least one of a processor 120, a speaker 210, a microphone array 220, a display 230, a camera 240, or communication circuitry 250. The processor 120, the speaker 210, the microphone array 220, the display 230, the camera 240, and the communication circuitry 250 may be electronically and/or operably coupled with each other by an electronical component such as a communication bus 260. Hardware being operably coupled may mean that a direct connection or an indirect connection between the hardware is established wired or wirelessly so that certain hardware is controlled by other hardware among the hardware. A type and/or the number of hardware included in the electronic device 101 is not limited to an example of FIG. 2.

According to an embodiment, the processor 120 of the electronic device 101 may include a hardware component for processing data based on one or more instructions. For example, the hardware component for processing data may include an arithmetic and logic unit (ALU), a floating point unit (FPU), a field programmable gate array (FPGA), and/or a central processing unit (CPU). The number of the processor 120 may be one or more. For example, the processor 120 may have a structure of a multi-core processor such as a dual core, a quad core, or a hexa core. The processor 120 of FIG. 2 may include the processor 120 of FIG. 1.

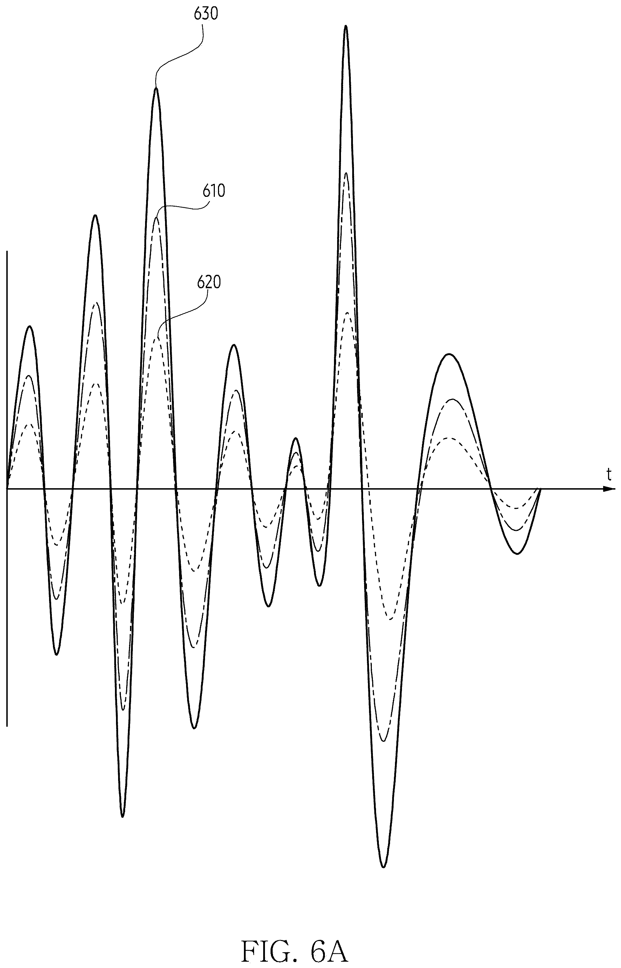

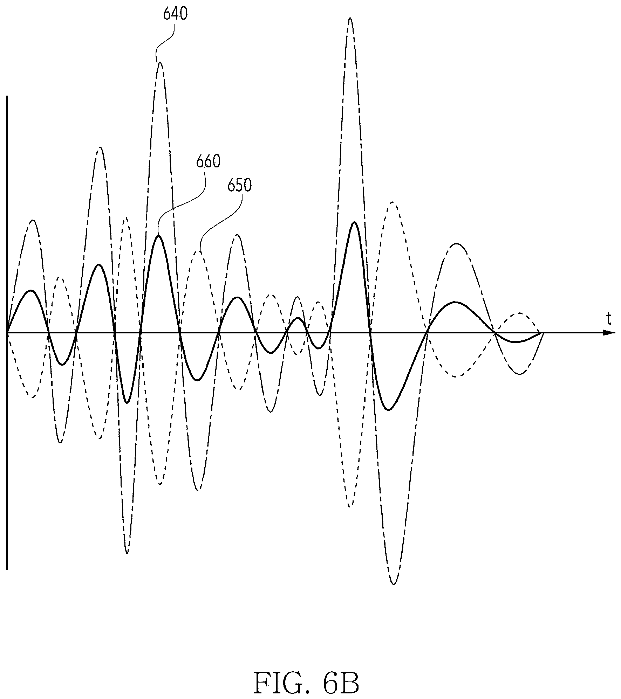

In memory (e.g., the memory 130 of FIG. 1), one or more instructions indicating a calculation and/or an operation to be performed by the processor 120 on data may be stored. A set of one or more instructions may be referred to as firmware, an operating system, a process, a routine, a sub-routine, and/or an application. For example, the electronic device 101 and/or the processor 120 may perform an operation of FIG. 6 when a set of a plurality of instructions distributed in a form of the operating system, the firmware, a driver, and/or the application is executed. Hereinafter, an application being installed in the electronic device 101 may mean that one or more instructions provided in a form of the application are stored in the memory of the electronic device 101 and the application is stored in an executable format (e.g., a file with an extension preset by the operating system of the electronic device 101) by the processor 120 of the electronic device 101.

According to an embodiment, the display 230 of the electronic device 101 may display visualized information to the user, by being controlled by the processor 120. The number of the display 230 included in the electronic device 101 may be one or more. For example, the display 230 may output the visualized information to the user by being controlled by the processor 120 and/or a graphic processing unit (GPU). The display 230 may include a flat panel display (FPD), and/or electronic paper. For example, the flat panel display (FPD) may include a liquid crystal display (LCD), a plasma display panel (PDP), a digital mirror device (DMD), one or more light emitting diodes (LEDs), and/or a micro LED. For example, the LED may include an organic LED (OLED). For example, in an embodiment where the display 230 includes the LCD, the display 230 may include a light source (e.g., backlight) for emitting light toward the LCD. The light source may be omitted in an embodiment where the display 230 includes the OLED. For example, the display 230 may include a panel and at least one display driver integrated-circuit (DDI). For example, in case that the panel includes a plurality of LEDs arranged in a form of a two-dimensional matrix, the DDI may control at least one LED included in a corresponding row or column among the plurality of LEDs. That the DDI controls at least one LED may include adjusting luminance and/or brightness of the LEDs.

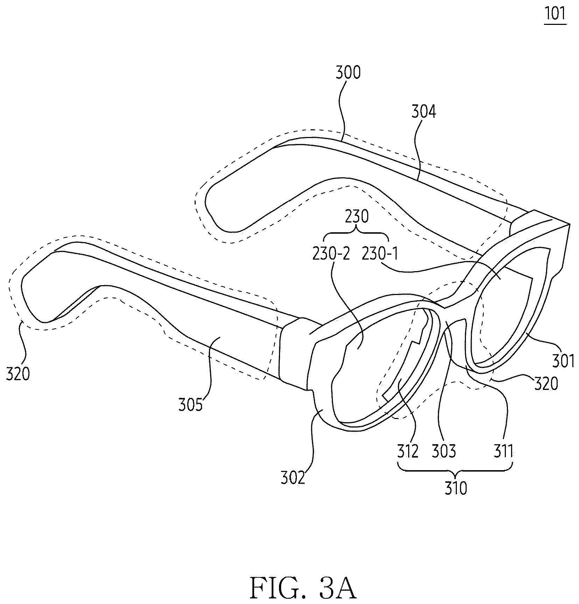

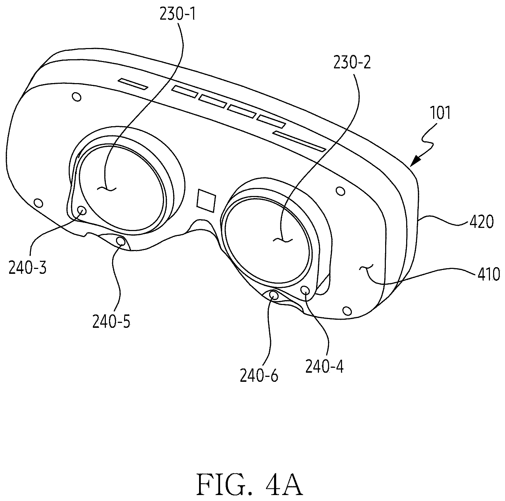

According to an embodiment, transmission of light may occur in at least a portion of the display 230. The electronic device 101 may provide a user experience associated with an augmented reality by providing the user with a combination of light outputted through the display 230 and light passing through the display 230. An example of a structure of the electronic device 101 to provide the user experience associated with the augmented reality will be described with reference to FIGS. 3A to 3B. According to an embodiment, the electronic device 101 may have a structure where the display 230 superimposes the entire field-of-view (FoV) of the user in a state of being worn on the user's body part such as a head. The display 230 may block ambient light of the electronic device 101 from being transmitted to the user's eye in the state. For example, the electronic device 101 may provide the user with a user experience associated with a virtual reality, using the display 230. An example of a structure of the electronic device 101 to provide the user experience associated with the virtual reality will be described with reference to FIGS. 4A to 4B.

According to an embodiment, the microphone array 220 of the electronic device 101 may output an electrical signal indicating vibration of the atmosphere. The microphone array 220 may obtain an acoustic signal. In an embodiment, the microphone array 220 included in the electronic device 101 may include a plurality of microphones. For example, the plurality of microphones may be arranged at a preset interval. For example, the electronic device 101 may compare amplitudes of the acoustic signals received through each of the plurality of microphones based on the interval between the plurality of microphones. The electronic device 101 may obtain azimuth angles, based on comparing the amplitudes of the acoustic signals received through each of the plurality of microphones. The electrical signal outputted from the microphone array 220 may be transmitted to the processor 120. The processor 120 may obtain, from the electrical signal, an audio signal to reconstruct the vibration using the speaker 210. For example, the processor 120 may obtain the audio signal, based on the acoustic signals. The processor 120 may output the audio signal through the speaker 210.

In an embodiment, an FoV of the camera 240 is an area formed based on a view angle where a lens of the camera 240 may receive light, and may correspond to an area corresponding to an image generated from the camera 240. Hereinafter, a subject and/or an external object may mean an object included in the FOV of the camera 240 and distinguished from the electronic device 101. In an embodiment, the FoV of the camera 240 may at least partially match an environment viewable to the user through the display 230, such as the FoV 110 of FIG. 2.

According to an embodiment, the communication circuitry 250 of the electronic device 101 may include a hardware component to support transmission and/or reception of an electrical signal (or data) between the electronic device 101 and an external electronic device. For example, the communication circuitry 250 may include at least one of a MODEM, an antenna, and an optic/electronic (O/E) converter. The communication circuitry 250 may support the transmission and/or the reception of the electrical signal (or the data) based on various types of protocols such as Ethernet, a local area network (LAN), a wide area network (WAN), wireless fidelity (WiFi), Bluetooth, Bluetooth low energy (BLE), Zigbee, long term evolution (LTE), and/or 5G new radio (NR).

Although not illustrated, the electronic device 101 may include other output means to output information in a different form other than a visual form and an audible form. For example, the electronic device 101 may include a motor to provide haptic feedback based on vibration. On the other hand, although illustrated based on different blocks, an embodiment is not limited thereto, and a portion (e.g., the processor 120, the speaker 210, the microphone array 220, the display 230, the camera 240, and the communication circuitry 250) of the hardware component illustrated in FIG. 2 may be included in a single integrated circuit such as a system on a chip (SoC).

The electronic device 101 according to an embodiment may obtain an image based on the camera 240. For example, the electronic device 101 may identify, based on the image obtained by the camera 240, an external object viewable through the display 230. For example, the electronic device 101 may identify the external object, using the camera 240. The electronic device 101 may identify a direction of the external object, based on identifying the external object. For example, the direction of the external object may include a direction from the electronic device 101 to the external object. The electronic device 101 may identify the external object in the image obtained based on the camera 240. The electronic device 101 may identify a position of the external object, based on identifying the external object. The electronic device 101 may identify the position of the external object viewable through the display 230. For example, the electronic device 101 may identify the position of the external object based on a plurality of microphones arranged in the microphone array 220 of the electronic device 101. The electronic device 101 may control the microphone array 220 based on the identified position of the external object. For example, the electronic device 101 may form a beam having an azimuth angle corresponding to the identified position by the microphone array 220. For example, the electronic device 101 may obtain the acoustic signal generated by the external object, based on forming the beam.

According to an embodiment, the electronic device 101 may identify the external object viewable through the display 230. The electronic device 101 may display, based on identifying the external object, a bounding box surrounding the external object. For example, the bounding box may be formed in a closed curve surrounding the external object. For example, the bounding box may be formed in a polygon surrounding the external object. In an embodiment, the electronic device 101 may obtain the acoustic signal generated by the external object while identifying the external object. For example, the electronic device 101 may display, based on the acoustic signal, a visual object (e.g., a control window) to adjust a volume of the acoustic signal in association with the external object in the display 230. For example, the visual object to adjust the volume of the acoustic signal may be formed in at least a portion of an area displaying the external object. For example, the area displaying the external object may be referred to as the bounding box. For example, the electronic device 101 may display the visual object to adjust the volume of the acoustic signal generated by the external object in at least a portion of the area where the external object is displayed. For example, the electronic device 101 may display the visual object to adjust the volume of the acoustic signal superimposed on the area where the external object is displayed.

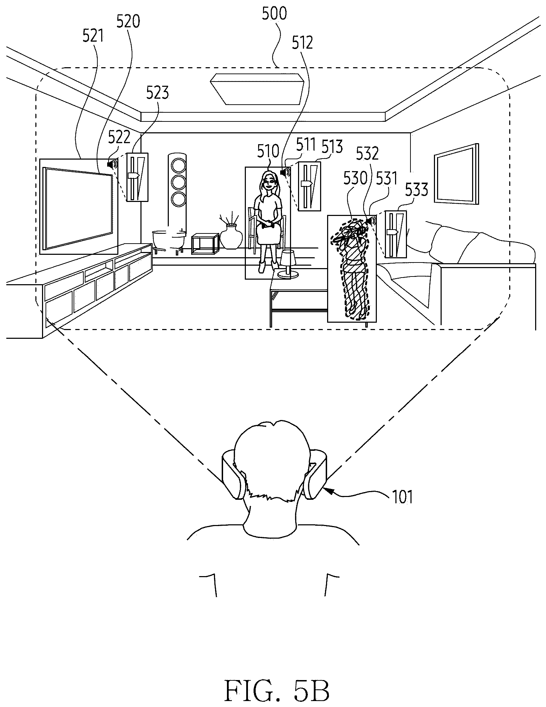

For example, according to an embodiment, the electronic device 101 may display the visual object to adjust the volume of the acoustic signal generated by the external object on the area where the external object is displayed. The electronic device 101 may receive an input for the visual object while displaying the visual object. For example, the input may include a gesture tapping the visual object. For example, the input may include a gesture maintaining the visual object pressed for a preset time (e.g., about 1 second). For example, the input may include a gesture dragging the visual object in a preset direction. The electronic device 101 may display, based on the input, a second visual object different from the visual object which is a first visual object. For example, the second visual object may be a visual object which receives an input to adjust the volume of the acoustic signal generated by the external object. For example, the second visual object may include an object to adjust the volume, such as a slider. A description of the first visual object and the second visual object will be described later in FIG. 5B.

According to an embodiment, the electronic device 101 may display the visual object to adjust the volume of the acoustic signal. The electronic device 101 may receive the input to adjust the volume received based on the visual object. In response to the input to adjust the volume, the electronic device 101 may adjust and output the volume of an audio signal associated with the acoustic signal through the speaker 210. For example, the audio signal associated with the acoustic signal may include a signal converted to output the acoustic signal generated by the external object through the speaker 210. For example, the audio signal may be obtained based on sampling the acoustic signal. The electronic device 101 may obtain, based on sampling the acoustic signal, the audio signal. For example, the electronic device 101 may receive the input for increasing the volume. The electronic device may superimpose (or add), in response to the input for increasing the volume, a tuning signal having a phase corresponding to a phase of the acoustic signal on the acoustic signal. The electronic device 101 may change the superimposed (or added) acoustic signal into the audio signal and output a relatively loud sound compared to before receiving the input for increasing the volume. For example, the electronic device 101 may output, in response to the input for decreasing the volume, an audio signal having a preset difference with respect to a phase of the acoustic signal. An operation of the electronic device 101 for decreasing the volume of the acoustic signal may be referred to as an active noise canceling (ANC) function. For example, the electronic device 101 may superimpose (or add) a tuning signal to offset the phase of the acoustic signal on the acoustic signal. For example, the tuning signal to offset the phase of the acoustic signal may be a signal having a phase difference of about 180° from the phase of the acoustic signal. The electronic device 101 may output the audio signal obtained by superimposing the acoustic signal and the tuning signal through the speaker 210. The audio signal obtained based on the tuning signal to offset the phase of the acoustic signal may have amplitude relatively smaller than amplitude of the acoustic signal.

According to an embodiment, the electronic device 101 may adjust a level of the acoustic signal obtained from the external object. The electronic device 101 may increase the level of the acoustic signal obtained from the external object. The electronic device 101 may obtain an acoustic signal having an increased level. The electronic device 101 may obtain an audio signal by sampling the acoustic signal having the increased level. The electronic device 101 may decrease the level of the acoustic signal obtained from the external object. The electronic device 101 may obtain an acoustic signal having a decreased level. The electronic device 101 may obtain an audio signal by sampling the acoustic signal having the decreased level. The electronic device 101 may obtain, based on the acoustic signal having an adjusted level, the audio signal.

According to an embodiment, the electronic device 101 may be connected to the external object (e.g., a TV or a speaker) through the communication circuitry 250. In a state connected with the external object through the communication circuitry 250, the electronic device 101 may display, in association with the external object viewable through the display 230, a visual object to control the external object. For example, the visual object to control the external object may be a visual object to adjust the volume of the acoustic signal transmitted from the external object. The electronic device 101 may receive the input to adjust the volume of the acoustic signal transmitted from the external object through the visual object. For example, the electronic device 101 may superimpose (or add), in response to the input for increasing the volume of the acoustic signal, a tuning signal having a phase corresponding to the acoustic signal transmitted from the external object on the acoustic signal. The electronic device 101 may obtain, based on the tuning signal superimposed on the acoustic signal, an audio signal. The electronic device 101 may output the audio signal through the speaker 210. For example, the electronic device 101 may superimpose (or add), in response to the input for decreasing the volume of the acoustic signal, the tuning signal, which is corresponding to the acoustic signal transmitted from the external object, having a preset difference with respect to a phase of the acoustic signal, on the acoustic signal. The electronic device 101 may obtain, based on superimposing (or adding) the tuning signal on the acoustic signal, the audio signal. The electronic device 101 may output, based on obtaining the audio signal, the audio signal through the speaker 210.

According to an embodiment, the electronic device 101 may display the visual object to adjust the volume of the external object while displaying the external object connected through the communication circuitry 250. For example, the electronic device 101 may receive an input for the visual object. The electronic device 101 may receive an input to adjust the volume of the external object received based on the visual object. The electronic device 101 transmit, in response to the input, a control signal to adjust the volume of the audio signal outputted by the external object, to the external object through the communication circuitry 250. The external object may adjust the volume based on the control signal.

According to an embodiment, the electronic device 101 may receive information on a virtual object from the external electronic device through the communication circuitry 250. The electronic device 101 may display a virtual object based on the information on the virtual object through the display 230. For example, the electronic device 101 may receive information on an acoustic signal associated with the virtual object from the external electronic device. The electronic device 101 may output, based on the information on the acoustic signal, an audio signal. The electronic device 101 may display an area where the virtual object is displayed while displaying the virtual object through the display 230. The electronic device 101 may display a visual object to adjust a volume of the virtual object in the area where the virtual object is displayed. The electronic device 101 may identify an input for the visual object to adjust the volume of the virtual object. For example, the input may include the input to adjust the volume.

As described above, according to an embodiment, the electronic device 101 may display an external object and/or a virtual object through the display 230. The electronic device 101 may obtain an acoustic signal associated with the external object and/or the virtual object viewable through the display 230. In an embodiment, the electronic device 101 may control a volume of the acoustic signal associated with the external object and/or the virtual object. The electronic device 101 may output an audio signal by controlling the volume of the acoustic signal. The audio signal may be associated with the acoustic signal generated by the external object and/or the virtual object. The electronic device 101 may enhance the user experience of the electronic device 101 by controlling the volume of the audio signal associated with the external object and/or the virtual object.

Hereinafter, an example of a form factor of the electronic device 101 according to an embodiment will be described with reference to FIGS. 3A to 3B and/or 4A to 4B.

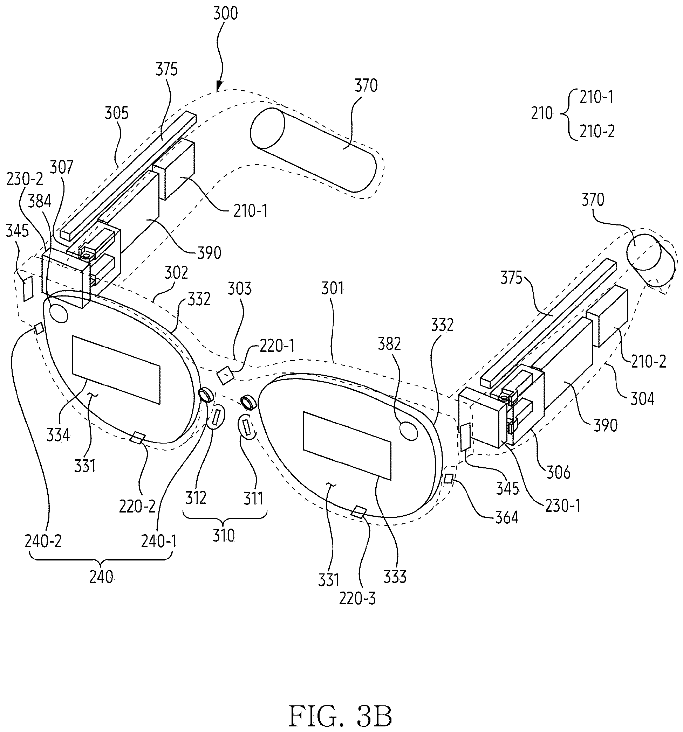

FIG. 3A is an example of a perspective view of an electronic device according to an embodiment. FIG. 3B is an example of one or more hardware disposed in an electronic device according to an embodiment. An electronic device 101 of FIGS. 3A to 3B may be an example of the electronic device 101 of FIG. 1 to FIG 2. Referring to FIG. 3A, according to an embodiment, the electronic device 101 may include at least one display 230 and a frame 300 supporting the at least one display 230. The at least one display 230 may be an example of the display 230 of FIG. 2.

According to an embodiment, the electronic device 101 may be wearable on a portion of the user's body. The electronic device 101 may provide augmented reality (AR), virtual reality (VR), or mixed reality (MR) combining the augmented reality and the virtual reality to a user wearing the electronic device 101. For example, the electronic device 101 may display a virtual reality image provided from at least one optical device 382 and 384 of FIG. 3B on at least one display 230, in response to a user's preset gesture obtained through a motion recognition camera 240-2 and 364 of FIG. 3B.

According to an embodiment, the at least one display 230 may provide visual information to a user. For example, the at least one display 230 may include a transparent or translucent lens. The at least one display 230 may include a first display 230-1 and/or a second display 230-2 spaced apart from the first display 230-1. For example, the first display 230-1 and the second display 230-2 may be disposed at positions corresponding to the user's left and right eyes, respectively.

Referring to FIG. 3B, the at least one display 230 may provide visual information transmitted through a lens included in the at least one display 230 from ambient light to a user and other visual information distinguished from the visual information. The lens may be formed based on at least one of a fresnel lens, a pancake lens, or a multi-channel lens. For example, the at least one display 230 may include a first surface 331 and a second surface 332 opposite to the first surface 331. A display area may be formed on the second surface 332 of at least one display 230. When the user wears the electronic device 101, ambient light may be transmitted to the user by being incident on the first surface 331 and being penetrated through the second surface 332. For another example, the at least one display 230 may display an augmented reality image in which a virtual reality image provided by the at least one optical device 382 and 384 is combined with a reality screen transmitted through ambient light, on a display area formed on the second surface 332.

According to an embodiment, the at least one display 230 may include at least one waveguide 333 and 334 that transmits light transmitted from the at least one optical device 382 and 384 by diffracting to the user. The at least one waveguide 333 and 334 may be formed based on at least one of glass, plastic, or polymer. A nano pattern may be formed on at least a portion of the outside or inside of the at least one waveguide 333 and 334. The nano pattern may be formed based on a grating structure having a polygonal or curved shape. Light incident to an end of the at least one waveguide 333 and 334 may be propagated to another end of the at least one waveguide 333 and 334 by the nano pattern. The at least one waveguide 333 and 334 may include at least one of at least one diffraction element (e.g., a diffractive optical element (DOE), a holographic optical element (HOE)), and a reflection element (e.g., a reflection mirror). For example, the at least one waveguide 333 and 334 may be disposed in the electronic device 101 to guide a screen displayed by the at least one display 230 to the user's eyes. For example, the screen may be transmitted to the user's eyes based on total internal reflection (TIR) generated in the at least one waveguide 333 and 334.

The electronic device 101 may analyze an object included in a real image collected through a photographing camera (not illustrated) (e.g., the camera 240 of FIG. 2), combine with a virtual object corresponding to an object that become a subject of augmented reality provision among the analyzed object, and display on the at least one display 230. The virtual object may include at least one of text and images for various information associated with the object included in the real image. The electronic device 101 may analyze the object based on a multi-camera such as a stereo camera. For the object analysis, the electronic device 101 may execute time-of-flight (ToF) and/or simultaneous localization and mapping (SLAM), which are supported by the multi-camera. The user wearing the electronic device 101 may watch an image displayed on the at least one display 230.

According to an embodiment, a frame 300 may be configured with a physical structure in which the electronic device 101 may be worn on the user's body. According to an embodiment, the frame 300 may be configured so that when the user wears the electronic device 101, the first display 230-1 and the second display 230-2 may be positioned corresponding to the user's left and right eyes. The frame 300 may support the at least one display 230. For example, the frame 300 may support the first display 230-1 and the second display 230-2 to be positioned at positions corresponding to the user's left and right eyes.

Referring to FIG. 3A, according to an embodiment, the frame 300 may include an area 320 at least partially in contact with the portion of the user's body in case that the user wears the electronic device 101. For example, the area 320 of the frame 300 in contact with the portion of the user's body may include an area in contact with a portion of the user's nose, a portion of the user's ear, and a portion of the side of the user's face that the electronic device 101 contacts. According to an embodiment, the frame 300 may include a nose pad 310 that is contacted on the portion of the user's body. When the electronic device 101 is worn by the user, the nose pad 310 may be contacted on the portion of the user's nose. The frame 300 may include a first temple 304 and a second temple 305, which are contacted on another portion of the user's body that is distinct from the portion of the user's body.

For example, the frame 300 may include a first rim 301 surrounding at least a portion of the first display 230-1, a second rim 302 surrounding at least a portion of the second display 230-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the electronic device 101 may identify an external object (e.g., a user's fingertip) touching the frame 300 and/or a gesture performed by the external object by using a touch sensor, a grip sensor, and/or a proximity sensor formed on at least a portion of the surface of the frame 300.

According to an embodiment, the electronic device 101 may include hardware (e.g., hardware described above based on the block diagram of FIG. 2) that performs various functions. For example, the hardware may include a battery module 370, an antenna module 375, the at least one optical device 382 and 384, a speaker 210, a microphone array 220, a light emitting module (not illustrated), and/or a printed circuit board 390. Various hardware may be disposed in the frame 300.

According to an embodiment, the microphone array 220 of the electronic device 101 may obtain a sound signal, by being disposed on at least a portion of the frame 300. The first microphone 220-1 disposed on the nose pad 310, the second microphone 220-2 disposed on the second rim 302, and the third microphone 220-3 disposed on the first rim 301 are illustrated in FIG. 3B, but the number and disposition of the microphones included in the microphone array 220 are not limited to an embodiment of FIG. 3B. In a case that the number of the microphone included in the electronic device 101 is two or more, the electronic device 101 may identify a direction of the sound signal by using a plurality of microphones disposed on different portions of the frame 300.

According to an embodiment, the at least one optical device 382 and 384 may project a virtual object on the at least one display 230 to provide various image information to a user. For example, the at least one optical device 382 and 384 may be projectors. The at least one optical device 382 and 384 may be disposed adjacent to the at least one display 230 or may be included in the at least one display 230 as a portion of the at least one display 230. According to an embodiment, the electronic device 101 may include a first optical device 382 corresponding to the first display 230-1 and a second optical device 384 corresponding to the second display 230-2. For example, the at least one optical device 382 and 384 may include the first optical device 382 disposed at an edge of the first display 230-1 and the second optical device 384 disposed at an edge of the second display 230-2. The first optical device 382 may transmit light outputted from the first display 230-1 to the first waveguide 333, and the second optical device 384 may transmit light outputted from the second display 230-2 to the second waveguide 334.

In an embodiment, a camera 240 (e.g., the camera 240 of FIG. 2) may include the photographing camera, an eye tracking camera (ET CAM) 240-1, and/or the motion recognition camera 240-2 and 364. The photographing camera, the eye tracking camera 240-1, and the motion recognition camera 240-2 and 364 may be disposed at different positions on the frame 300 and may perform different functions. The eye tracking camera 240-1 may output data indicating a gaze of the user wearing the electronic device 101. For example, the electronic device 101 may detect the gaze from an image including the user's pupil obtained through the eye tracking camera 240-1. An example in which the eye tracking camera 240-1 is disposed toward the user's right eye is illustrated in FIG. 3B, but the embodiment is not limited thereto, and the eye tracking camera 240-1 may be disposed alone toward the user's left eye or may be disposed toward two eyes.

In an embodiment, the photographing camera may photograph a real image or background to be matched with a virtual image in order to implement the augmented reality or mixed reality content. The photographing camera may photograph an image of a specific object existing at a position viewed by the user and may provide the image to the at least one display 230. The at least one display 230 may display one image in which a virtual image provided through the at least one optical device 382 and 384 is overlapped with information on the real image or background including an image of the specific object obtained by using the photographing camera. In an embodiment, the photographing camera may be disposed on the bridge 303 disposed between the first rim 301 and the second rim 302.

The eye tracking camera 240-1 may implement a more realistic augmented reality by matching the user's gaze with the visual information provided on the at least one display 230, by tracking the gaze of the user wearing the electronic device 101. For example, when the user looks at the front, the electronic device 101 may naturally display environment information associated with the user's front on the at least one display 230 at a position where the user is positioned. The eye tracking camera 240-1 may be configured to capture an image of the user's pupil in order to determine the user's gaze. For example, the eye tracking camera 240-1 may receive gaze detection light reflected from the user's pupil and may track the user's gaze based on the position and movement of the received gaze detection light. In an embodiment, the eye tracking camera 240-1 may be disposed at a position corresponding to the user's left and right eyes. For example, the eye tracking camera 240-1 may be disposed in the first rim 301 and/or the second rim 302 to face the direction in which the user wearing the electronic device 101 is positioned.

The motion recognition camera 240-2 and 364 may provide a specific event to the screen provided on the at least one display 230 by recognizing the movement of the whole or portion of the user's body, such as the user's torso, hand, or face. The motion recognition camera 240-2 and 364 may obtain a signal corresponding to motion by recognizing the user's motion (e.g., gesture recognition), and may provide a display corresponding to the signal to the at least one display 230. The processor may identify a signal corresponding to the operation and may perform a preset function based on the identification. In an embodiment, the motion recognition camera 240-2 and 364 may be disposed on the first rim 301 and/or the second rim 302.

The camera 240 included in the electronic device 101 is not limited to the above-described eye tracking camera 240-1 and the motion recognition camera 240-2 and 364. For example, the electronic device 101 may identify an external object included in the FoV by using a camera 240 disposed toward the user's FoV. The electronic device 101 identifying the external object may be performed based on a sensor for identifying a distance between the electronic device 101 and the external object, such as a depth sensor and/or a time of flight (ToF) sensor. The camera 240 disposed toward the FoV may support an autofocus function and/or an optical image stabilization (OIS) function. For example, in order to obtain an image including a face of the user wearing the electronic device 101, the electronic device 101 may include the camera 240 (e.g., a face tracking (FT) camera) disposed toward the face.

Although not illustrated, the electronic device 101 according to an embodiment may further include a light source (e.g., LED) that emits light toward a subject (e.g., user's eyes, face, and/or an external object in the FoV) photographed by using the camera 240. The light source may include an LED having an infrared wavelength. For example, the light source may be disposed on at least one of the frame 300, and the hinge units 306 and 307.

According to an embodiment, the battery module 370 may supply power to electronic components of the electronic device 101. In an embodiment, the battery module 370 may be disposed in the first temple 304 and/or the second temple 305. For example, the battery module 370 may be a plurality of battery modules 370. In an embodiment, the plurality of battery modules 370, respectively, may be disposed on each of the first temple 304 and the second temple 305. In an embodiment, the battery module 370 may be disposed at an end of the first temple 304 and/or the second temple 305.

The antenna module 375 may transmit the signal or power to the outside of the electronic device 101 or may receive the signal or power from the outside. The antenna module 375 may be electrically and/or operably connected to the communication circuitry 250 of FIG. 2. In an embodiment, the antenna module 375 may be disposed in the first temple 304 and/or the second temple 305. For example, the antenna module 375 may be disposed close to one surface of the first temple 304 and/or the second temple 305.

The speaker 210 may output a sound signal to the outside of the electronic device 101. A sound output module may be referred to as a speaker. In an embodiment, the speaker 210 may be disposed in the first temple 304 and/or the second temple 305 in order to be disposed adjacent to the ear of the user wearing the electronic device 101. For example, the speaker 210 may include a second speaker 210-2 disposed adjacent to the user's left ear by being disposed in the first temple 304, and a first speaker 210-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the electronic device 101 to the user. For example, when the electronic device 101 requires charging, it may emit red light at a constant cycle. In an embodiment, the light emitting module may be disposed on the first rim 301 and/or the second rim 302.

Referring to FIG. 3B, according to an embodiment, the electronic device 101 may include the printed circuit board (PCB) 390. For example, the PCB 390 may be included in at least one of the first temple 304 or the second temple 305. For example, the PCB 390 may include an interposer disposed between at least two sub PCBs. On the PCB 390, one or more hardware (e.g., hardware illustrated by blocks of FIG. 2) included in the electronic device 101 may be disposed. In an embodiment, the electronic device 101 may include a flexible PCB (FPCB) for interconnecting the hardware.

According to an embodiment, the electronic device 101 may include at least one of a gyro sensor, a gravity sensor, and/or an acceleration sensor for detecting the posture of the electronic device 101 and/or the posture of a body part (e.g., a head) of the user wearing the electronic device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the electronic device 101 may identify the user's motion and/or gesture performed to execute or stop a specific function of the electronic device 101 based on the IMU.

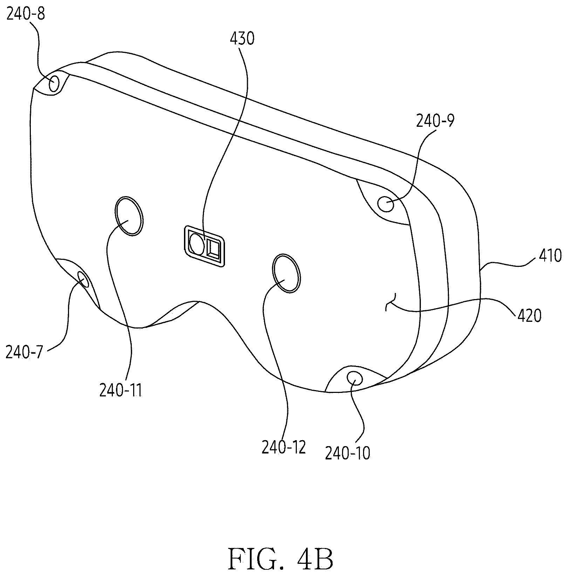

FIGS. 4A to 4B are an example of an external appearance of an electronic device according to an embodiment. An electronic device 101 of FIGS. 4A to 4B may be an example of the electronic device 101 of FIG. 2. According to an embodiment, an example of an external appearance of a first surface 410 of a housing of the electronic device 101 may be illustrated in FIG. 4A, and an example of an external appearance of a second surface 420 opposite to the first surface 410 may be illustrated in FIG. 4B.

Referring to FIG. 4A, according to an embodiment, the first surface 410 of the electronic device 101 may have an attachable shape on the user's body part (e.g., the user's face). Although not illustrated, the electronic device 101 may further include a strap for being fixed on the user's body part, and/or one or more temples (e.g., the first temple 304 and/or the second temple 305 of FIGS. 3A to 3B). A first display 230-1 for outputting an image to the left eye among the user's two eyes and a second display 230-2 for outputting an image to the right eye among the user's two eyes may be disposed on the first surface 410. The electronic device 101 may further include rubber or silicon packing, which are formed on the first surface 410 , for preventing interference by light (e.g., ambient light) different from the light emitted from the first display 230-1 and the second display 230-2.

According to an embodiment, the electronic device 101 may include cameras 240-3 and 240-4 for photographing and/or tracking two eyes of the user adjacent to each of the first display 230-1 and the second display 230-2. The cameras 240-3 and 240-4 may be referred to as the ET camera . According to an embodiment, the electronic device 101 may include cameras 240-5 and 240-6 for photographing and/or recognizing the user's face. The cameras 240-5 and 240-6 may be referred to as a FT camera.

Referring to FIG. 4B, a camera (e.g., cameras 240-7, 240-8, 240-9, 240-10, 240-11, and 240-12), and/or a sensor (e.g., the depth sensor 430) for obtaining information associated with the external environment of the electronic device 101 may be disposed on the second surface 420 opposite to the first surface 410 of FIG. 4A. For example, the cameras 240-7, 240-8, 240-9, and 240-10 may be disposed on the second surface 420 in order to recognize an external object (e.g., the external object 240 of FIG. 2) distinct from the electronic device 101. For example, by using cameras 240-11 and 240-12, the electronic device 101 may obtain an image and/or video to be transmitted to each of the user's two eyes. The camera 240-11 may be disposed on the second surface 420 of the electronic device 101 to obtain an image to be displayed through the second display 230-2 corresponding to the right eye among the two eyes. The camera 240-12 may be disposed on the second surface 420 of the electronic device 101 to obtain an image to be displayed through the first display 230-1 corresponding to the left eye among the two eyes.

According to an embodiment, the electronic device 101 may include the depth sensor 430 disposed on the second surface 420 in order to identify a distance between the electronic device 101 and the external object. By using the depth sensor 430, the electronic device 101 may obtain spatial information (e.g., a depth map) about at least a portion of the FoV of the user wearing the electronic device 101.

Although not illustrated, a microphone (e.g., the microphone array 220 of FIG. 2) for obtaining sound outputted from the external object may be disposed on the second surface 420 of the electronic device 101. The number of microphones may be one or more according to embodiments.

As described above, according to an embodiment, the electronic device 101 may have a form factor for being worn on the user's head. The electronic device 101 may provide a user experience based on an augmented reality, a virtual reality, and/or a mixed reality in a state that the electronic device 101 is worn on the head. In a state that the wearable device 101 outputs an audio signal through a speaker (e.g., the speaker 210 of FIG. 2), in case that a volume of the audio signal is different from a volume of an external sound (e.g., a sound generated from an external object adjacent to the electronic device 101), the user wearing the electronic device 101 may feel a sense of heterogeneity. In order to compensate for the sense of heterogeneity, the electronic device 101 may adjust the volume of the audio signal based on the external sound. The electronic device 101 may realistically reproduce the audio signal by adjusting the volume of the audio signal based on the external sound.

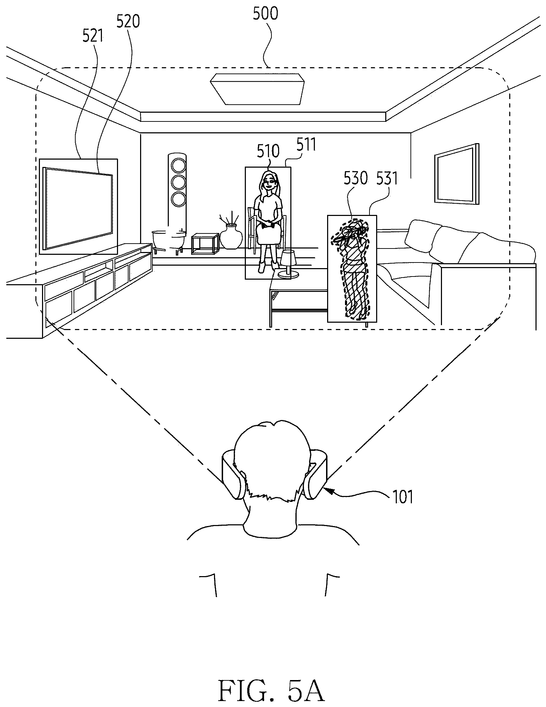

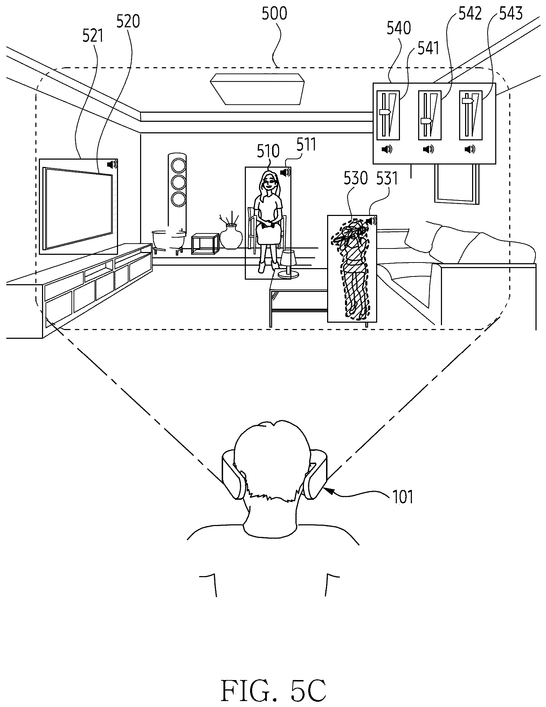

FIG. 5A is an example of a screen displayed through a display of an electronic device according to an embodiment. FIG. 5B is an example of a screen displayed through a display of an electronic device according to an embodiment. FIG. 5C is an example of a screen displayed through a display of an electronic device according to an embodiment. An electronic device 101 of FIGS. 5A to 5C may be an example of the electronic device 101 of FIGS. 1, 2, 3A, 3B, 4A, and/or 4B. Operations of FIG. 5 may be executed by the processor 120 of FIGS. 1 and/or 2.

Referring to FIGS. 5A to 5C, the electronic device 101 may obtain an image using a camera (e.g., the camera 240 of FIG. 2). For example, a screen 500 of FIGS. 5A to 5C may include an image obtained based on a FoV of the camera of the electronic device 101. In a state of obtaining the image using the camera, the electronic device 101 may display the image (or the screen 500) through a display (e.g., the display 230 of FIG. 2).

According to an embodiment, the electronic device 101 may identify an external object and/or a virtual object in the screen 500. Referring to FIG. 5A, the electronic device 101 may identify a first external object 510 viewable through the display. The electronic device 101 may identify a second external object 520 viewable through the display. In an embodiment, the electronic device 101 may be connected to the second external object 520 through communication circuitry (e.g., the communication circuitry 250 of FIG. 2). For example, connecting to the second external object 520 may include that the electronic device 101 controls the second external object 520 or an operation of at least a portion of hardware components (e.g., the hardware components of FIG. 2) of the electronic device 101 is caused based on information (or a signal or data) transmitted from the second external object 520. The electronic device 101 may identify a virtual object 530 viewable through the display. The electronic device 101 may display, based on receiving information associated with the virtual object 530 from an external electronic device, the virtual object 530 in the display. For example, while receiving the information to display the virtual object 530, the electronic device 101 may receive information associated with an acoustic signal of the virtual object 530. Based on receiving the information associated with the acoustic signal of the virtual object 530, the electronic device 101 may output an audio signal corresponding to the virtual object 530 through a speaker (e.g., the speaker 210 of FIG. 2).

According to an embodiment, the electronic device 101 may identify the first external object 510. The electronic device 101 may display, based on identifying the first external object 510, a bounding box 511 surrounding the first external object 510. For example, the bounding box 511 surrounding the first external object 510 may be a closed curve including the first external object 510. For example, the bounding box 511 surrounding the first external object 510 may be a polygon including the first external object 510.

The electronic device 101 may obtain, based on identifying the first external object 510, an acoustic signal generated by the first external object 510. For example, the electronic device 101 may obtain the acoustic signal generated by the first external object 510, based on a microphone array (e.g., the microphone array 220 of FIG. 2) included in the electronic device 101. For example, the electronic device 101 may obtain the acoustic signal based on a plurality of microphones arranged in the microphone array. For example, the electronic device 101 may form a beam based on the plurality of microphones arranged in the microphone array. For example, the electronic device 101 may obtain, based on forming the beam, the acoustic signal generated by the first external object 510.

Referring to FIG. 5B, according to an embodiment, the electronic device 101 may display, based on identifying the first external object 510, the bounding box 511 surrounding the first external object 510. The bounding box 511 may be referred to as an area surrounding the first external object 510. While displaying the bounding box 511 surrounding the first external object 510, the electronic device 101 may obtain the acoustic signal generated by the first external object 510. While displaying the bounding box 511 surrounding the first external object 510, the electronic device 101 may display a visual object 512 to adjust a volume of the acoustic signal generated by the first external object 510.

According to an embodiment, the electronic device 101 may receive an input to adjust the volume of the acoustic signal generated by the first external object 510. For example, the input to adjust the volume of the acoustic signal generated by the first external object 510 may be received based on the first visual object 512. For example, the electronic device 101 may display, based on a gesture to select the first visual object 512, a second visual object 513, such as a slider. For example, the electronic device 101 may receive, based on displaying the second visual object 513 such as the slider, an input to adjust the second visual object 513 such as the slider. The electronic device 101 may adjust, based on the input to adjust the visual object 513 such as the slider, the volume of the acoustic signal generated by the first external object 510. The electronic device 101 may superimpose a tuning signal associated with a phase of the acoustic signal with the acoustic signal in order to adjust the volume of the acoustic signal. The electronic device 101 may obtain an audio signal based on superimposing the acoustic signal and the tuning signal. The electronic device 101 may output the audio signal through the speaker.

Referring to FIG. 5A, according to an embodiment, the electronic device 101 may identify the second external object 520. In an embodiment, the electronic device 101 may be connected to the second external object 520 through the communication circuitry. For example, in a state of being connected to the second external object 520 through the communication circuitry, the electronic device 101 may receive an acoustic signal to output a sound from the second external object 520 through the speaker of the electronic device 101. For example, the electronic device 101 may display, based on identifying the second external object 520, a bounding box 521 surrounding the second external object 520. The bounding box 521 may be referred to as an area surrounding the second external object 520.

Referring to FIG. 5B, according to an embodiment, the electronic device 101 may display a first visual object 522 to adjust a volume of the second external object 520 in at least a portion of the bounding box 521. The electronic device 101 may receive an input to adjust the volume of the acoustic signal generated by the second external object 520. For example, the input to adjust the volume of the acoustic signal generated by the second external object 520 may be received based on the first visual object 522. For example, the electronic device 101 may display, based on a gesture to select the first visual object 522, a second visual object 523 such as a slider. The electronic device 101 may receive, based on displaying the visual object 523 such as the slider, an input to adjust the second visual object 523 such as the slider. The electronic device 101 may adjust, based on the input to adjust the second visual object 523 as the slider, the volume of the acoustic signal generated by the second external object 520.

According to an embodiment, the electronic device 101 may establish a communication link between the second external object 520 and the electronic device 101. The electronic device 101 may adjust the volume of the acoustic signal transmitted from the second external object 520, based on the input to adjust the volume of the acoustic signal generated by the second external object 520. For example, the electronic device 101 may output an audio signal by adjusting the volume of the acoustic signal transmitted from the second external object 520. The electronic device 101 may output the audio signal having the adjusted acoustic signal through the speaker included in the electronic device 101. According to an embodiment, the electronic device 101 may transmit a control signal to adjust the volume of the acoustic signal to the second external object 520, based on the input to adjust the volume of the acoustic signal generated by the second external object 520. The input to adjust the volume of the acoustic signal may be referred to as an input to adjust the second visual object 523 such as the slider. According to an embodiment, the electronic device 101 may identify, based on the second visual object 523 such as the slider, an input for increasing the volume of the second external object 520. The electronic device 101 may transmit a control signal for increasing the volume of the acoustic signal of the second external object 520 to the second external object 520, based on the input for increasing the volume of the second external object 520. According to an embodiment, the electronic device 101 may identify, based on the second visual object 523 such as the slider, an input for decreasing the volume of the second external object 520. The electronic device 101 may transmit a control signal for decreasing the volume of the acoustic signal of the second external object 520 to the second external object 520, based on the input for decreasing the volume of the second external object 520.

According to an embodiment, the electronic device 101 may identify the second external object 520. The electronic device 101 may identify a direction of the second external object 520. The electronic device 101 may identify a direction from the electronic device 101 to the second external object 520. The electronic device 101 may identify a position of the second external object 520. For example, the electronic device 101 may identify the position of the second external object 520 in an image.

According to an embodiment, the electronic device 101 may obtain an acoustic signal corresponding to the direction in a state of identifying the direction of the second external object 520. The acoustic signal corresponding to the direction may include the acoustic signal generated by the second external object 520. The electronic device 101 may adjust the volume of the acoustic signal generated by the second external object 520. The electronic device 101 may perform substantially the same operation as an operation adjusting the volume of the first external object 510 in order to adjust the volume of the acoustic signal obtained from the second external object 520. For example, the electronic device 101 may perform an ANC function for decreasing the volume of the acoustic signal generated from the second external object 520.

Referring to FIG. 5A, according to an embodiment, the electronic device 101 may display the virtual object 530, based on information (or data) to display the virtual object 530. The information (or the data) to display the virtual object 530 may be generated by the electronic device 101. According to an embodiment, the electronic device 101 may receive information (or data) to display the virtual object 530 from an external electronic device. The electronic device 101 may display, based on receiving the information (or the data), the virtual object 530 through the display.

According to an embodiment, the electronic device 101 may generate an acoustic signal associated with the virtual object 530 generated from the electronic device 101. For example, the electronic device 101 may output, based on generating the acoustic signal, an audio signal corresponding to the acoustic signal through the speaker. For example, the electronic device 101 may adjust the acoustic signal. An operation of adjusting the acoustic signal will be described in FIGS. 5B to 5C.

According to an embodiment, the electronic device 101 may display, based on identifying the virtual object 530, a bounding box 531 surrounding the virtual object 530. For example, the bounding box 531 may be referred to as an area including the virtual object 530. For example, while displaying the bounding box 531, the electronic device 101 may generate the acoustic signal associated with the virtual object 530. While displaying the bounding box 531, the electronic device 101 may output the audio signal corresponding to the acoustic signal associated with the virtual object 530 through the speaker.

Referring to FIG. 5B, according to an embodiment, the electronic device 101 may display the bounding box 531, based on identifying the virtual object 530. The electronic device 101 may display, based on displaying the bounding box 531, a first visual object 532 to adjust the acoustic signal associated with the virtual object 530 in at least a portion in the bounding box 531. For example, the electronic device 101 may receive, based on displaying the first visual object 532, an input to select the second visual object 532. The electronic device 101 may display, based on receiving the input to select the first visual object 532, a second visual object 533 such as a slider to adjust a volume of the acoustic signal of the virtual object 530. The electronic device 101 may receive an input to adjust the second visual object 533 such as the slider. For example, the electronic device 101 may adjust the volume of the acoustic signal, based on receiving the input to adjust the second visual object 533 such as the slider. According to an embodiment, the electronic device 101 may receive, based on the second visual object 533 such as the slider, an input for increasing the volume of the acoustic signal of the virtual object 530. The electronic device 101 may increase, based on the input for increasing the volume of the acoustic signal, the volume of the acoustic signal of the virtual object 530. The electronic device 101 may output, based on increasing the volume of the acoustic signal of the virtual object 530, an audio signal associated with the acoustic signal through the speaker. According to an embodiment, the electronic device 101 may receive, based on the second visual object 533 such as the slider, an input for decreasing the volume of the acoustic signal of the virtual object 530. The electronic device 101 may decrease, based on the input for decreasing the volume of the acoustic signal, the volume of the acoustic signal of the virtual object 530. The electronic device 101 may output, based on decreasing the volume of the acoustic signal of the virtual object 530, the audio signal associated with the acoustic signal through the speaker.

Referring to FIG. 5C, according to an embodiment, the electronic device 101 may identify the first external object 510. The electronic device 101 may identify the second external object 520 connected through the communication circuitry. The electronic device 101 may identify the virtual object 530. The electronic device 101 may display, based on identifying the first external object 510, the bounding box 511 including the first external object 510. The electronic device 101 may display, based on identifying the second external object 520, the bounding box 521 including the second external object 520. The electronic device 101 may display, based on identifying the virtual object 530, the bounding box 531 including the virtual object 530.

According to an embodiment, the electronic device 101 may identify the acoustic signal generated by the first external object 510. For example, the electronic device 101 may obtain the acoustic signal based on the beam formed through the microphone array. The electronic device 101 may identify the acoustic signal generated by the second external object 520. The acoustic signal generated by the second external object 520 may include an acoustic signal transmitted from the second external object 520 to the electronic device 101. The electronic device 101 may identify the acoustic signal generated by the virtual object 530.

According to an embodiment, the electronic device 101 may display, based on identifying the acoustic signal, a visual object 540 to adjust the volume of the acoustic signal. For example, the electronic device 101 may display the visual object 540 on at least a portion of the screen 500. For example, the electronic device 101 may display, in the visual object 540, visual objects 541, 542, and 543 such as a slider to adjust the volume of each of the identified objects (e.g., the first external object 510, the second external object 520, and the virtual object 530). Although not illustrated, the electronic device 101 may display that each of the visual objects 541, 542, and 543 such as the slider corresponds to each of the identified objects 510, 520 and 530. For example, the electronic device 101 may display text matched to the first external object 510, the second external object 520, and/or the virtual object 530 on at least a portion of an area displaying the visual objects 541, 542, and 543 such as the slider. For example, the electronic device 101 may display the text to indicate the first external object 510, the second external object 520, and/or the virtual object 530 on at least a portion of the area displaying the visual objects 541, 542, and 543 such as the slider. For example, the electronic device 101 may display an icon matched to the first external object 510, the second external object 520, and/or the virtual object 530 on at least a portion of the area displaying the visual objects 541, 542, and 543 such as the slider.

For example, the electronic device 101 may receive an input to adjust the visual object 541 such as a slider. The electronic device 101 may adjust the volume of the acoustic signal generated by the first external object 510, based on the input to adjust the visual object 541 such as the slider. The electronic device 101 may output an audio signal associated with the acoustic signal whose volume has been adjusted. For example, the electronic device 101 may receive an input for increasing the volume. For example, the electronic device 101 may superimpose, based on the input for increasing the volume, a tuning signal having a phase corresponding to the acoustic signal generated by the first external object 510 on the acoustic signal. The electronic device 101 may obtain an audio signal based on superimposing of the acoustic signal and the tuning signal. The electronic device 101 may output, based on obtaining the audio signal, the audio signal through the speaker. For example, the electronic device 101 may receive an input for decreasing the volume. The electronic device 101 may superimpose, based on the input for decreasing the volume, a tuning signal having a phase of a preset difference (e.g., about 180°) from the acoustic signal generated by the first external object 510 on the acoustic signal. The electronic device 101 may decrease, based on the tuning signal, the volume of the acoustic signal. The electronic device 101 may obtain an audio signal, based on the acoustic signal decreased based on the tuning signal. The electronic device 101 may output the audio signal through the speaker based on obtaining the audio signal.

For example, the electronic device 101 may receive an input to adjust the visual object 542 such as a slider. The electronic device 101 may adjust, based on the input to adjust the visual object 542 as the slider, the volume of the acoustic signal generated by the second external object 520. The electronic device 101 may output an audio signal associated with the adjusted acoustic signal. For example, the electronic device 101 may receive, based on the visual object 542 such as the slider, an input to adjust the volume of the second external object 520. The electronic device 101 may adjust, based on the input, the volume of the second external object 520. For example, the electronic device 101 may receive an input for increasing the volume of the acoustic signal generated by the second external object 520. The electronic device 101 may increase the volume of the acoustic signal generated by the second external object 520, based on the input for increasing the volume of the acoustic signal generated by the second external object 520. For example, the electronic device 101 may superimpose a tuning signal having a phase corresponding to the acoustic signal generated by the second external object 520 on the acoustic signal. The electronic device 101 may obtain an audio signal, based on the acoustic signal and the tuning signal. The electronic device 101 may output the audio signal through the speaker. For example, the electronic device 101 may receive an input for decreasing the volume of the acoustic signal generated by the second external object 520. The electronic device 101 may superimpose, based on the input for decreasing the volume of the acoustic signal, a tuning signal, which is corresponding to the acoustic signal, having a difference of a preset phase with the acoustic signal on the acoustic signal. The electronic device 101 may decrease the volume of the acoustic signal by superimposing the tuning signal on the acoustic signal. The electronic device 101 may obtain an audio signal, based on the acoustic signal and the tuning signal. The electronic device 101 may output the obtained audio signal through the speaker.

For example, the electronic device 101 may receive an input to adjust the visual object 543 such as a slider. The electronic device 101 may adjust, based on the input to adjust the visual object 543 as the slider, the volume of the acoustic signal associated with the virtual object 530. For example, the electronic device 101 may receive an input for increasing the volume of the acoustic signal associated with the virtual object 530. The electronic device 101 may superimpose, based on receiving the input, a tuning signal having a phase corresponding to the acoustic signal associated with the virtual object 530 on the acoustic signal. The electronic device 101 may obtain an audio signal, based on the acoustic signal and the tuning signal. The electronic device 101 may output, based on obtaining the audio signal, the audio signal through the speaker. The electronic device 101 may receive an input for decreasing the volume of the acoustic signal associated with the virtual object 530. The electronic device 101 may superimpose, based on receiving the input, a tuning signal, which is corresponding to the acoustic signal associated with the virtual object 530, having a difference of a preset phase with the acoustic signal on the acoustic signal. The electronic device 101 may obtain an audio signal, based on the acoustic signal and the tuning signal. The electronic device 101 may output the obtained audio signal through the speaker.

As described above, according to an embodiment, the electronic device 101 may adjust acoustic signals corresponding to each of the objects (e.g., the first external object 510, the second external object 520, and/or the virtual object 530) viewable through the display. The electronic device 101 may obtain an audio signal based on the adjusted acoustic signal. The electronic device 101 may output, based on obtaining the audio signal, the audio signal through the speaker. The electronic device 101 may obtain audio signals associated with each of the acoustic signals based on adjusting the acoustic signals obtained based on the first external object 510, the second external object 520, and/or the virtual object 530. The electronic device 101 may enhance a user experience of the electronic device 101 by obtaining and outputting the audio signals.

FIG. 6A is an example of an electronic device that adjusts a volume of an acoustic signal, according to an embodiment. FIG. 6B is an example of an electronic device that adjusts a volume of an acoustic signal, according to an embodiment. The electronic device of FIGS. 6A to 6B may be an example of the electronic device 101 of FIGS. 1, 2, 3A, 3B, 4A, 4B, 5A, 5B, and/or 5C. Operations of FIGS. 6A to 6B may be executed by the processor 120 of FIGS. 1 and/or 2.

Referring to FIGS. 6A and/or 6B, according to an embodiment, the electronic device may identify a first external object (e.g., the first external object 510 of FIGS. 5A to 5C), a second external object (e.g., the second external object 520 of FIGS. 5A to 5C), and/or a virtual object (e.g., the virtual object 530 of FIGS. 5A to 5C). The electronic device may identify acoustic signals generated by the first external object, the second external object, and/or the virtual object. FIGS. 6A to 6B are described based on the acoustic signal and/or an audio signal associated with the first external object for convenience of description.

According to an embodiment, the electronic device may obtain an acoustic signal 610 or 640 generated by the first external object. For example, the electronic device may receive an input to adjust the volume of the acoustic signal. FIG. 6A is an example of an operation of the electronic device based on receiving an input for increasing the volume of the acoustic signal. According to an embodiment, the electronic device may generate, based on the input for increasing the volume of the acoustic signal 610, a tuning signal 620 for increasing the volume of the acoustic signal 610. For example, the tuning signal 620 may have substantially the same phase as a phase of the acoustic signal 610. For example, amplitude of the tuning signal 620 may vary according to the input for increasing the volume of the acoustic signal 610. For example, the amplitude of the tuning signal 620 may be matched to a distance moved by the visual object such as the slider of FIGS. 5B to 5C. For example, the electronic device may superimpose the tuning signal 620 on the acoustic signal 610, based on the input for increasing the volume of the acoustic signal 610. The electronic device 101 may obtain an audio signal 630, based on superimposing the tuning signal 620 on the acoustic signal 610. For example, the audio signal may include an electrical signal to output through a speaker. The electronic device may output, in response to obtaining the audio signal 630, the audio signal 630 through the speaker.

Referring to FIG. 6B, according to an embodiment, the electronic device may obtain the acoustic signal 640. For example, the electronic device may receive, based on obtaining the acoustic signal 640, an input to adjust a volume of the acoustic signal 640. The electronic device may receive an input for decreasing the volume of the acoustic signal 640. The electronic device may generate, based on the input for decreasing the volume of the acoustic signal 640, a tuning signal 650 for decreasing the volume of the acoustic signal 640. The tuning signal 650 may correspond to the acoustic signal 640 and may have a phase of a preset difference (e.g., about 180°) with the acoustic signal 640. The electronic device may superimpose the acoustic signal 640 and the tuning signal 650. The electronic device may obtain an audio signal 660, based on superimposing of the acoustic signal 640 and the tuning signal 650. The electronic device may output, based on obtaining the audio signal 660, the audio signal 660 through the speaker. For example, the audio signal 660 may be the audio signal 660, which corresponds to the acoustic signal 640, having a preset difference with respect to a phase of the acoustic signal 640.

Referring to FIGS. 6A to 6B, as described above, according to an embodiment, the electronic device may obtain the acoustic signals generated by the first external object, the second external object, and/or the virtual object. The electronic device may receive the input to adjust the volume of each of the acoustic signals. The electronic device may generate (or obtain), based on receiving the input to adjust the volume of each of the acoustic signals, tuning signals to adjust the volume of each of the acoustic signals. The electronic device may superimpose each of the tuning signals on each of the acoustic signals. The electronic device may obtain, based on the acoustic signals and the tuning signals, the audio signals corresponding to each of the acoustic signals. The electronic device may output the audio signals through the speaker. The electronic device may obtain the audio signal, based on the volume of the acoustic signal adjusted by the tuning signal. The electronic device may obtain the audio signal corresponding to the volume of the adjusted acoustic signal. The electronic device may output the audio signal, based on obtaining the audio signal. The electronic device may enhance a user experience of the electronic device by outputting the audio signal associated with the adjusted acoustic signal.

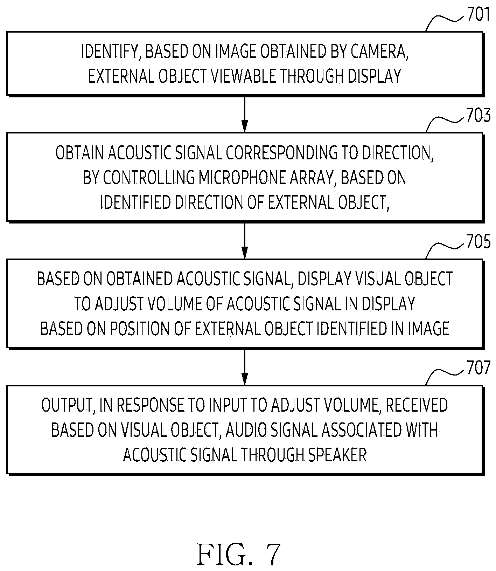

FIG. 7 is an example of a flowchart of an operation of an electronic device according to an embodiment. The electronic device of FIG. 7 may be an example of the electronic device 101 of FIGS. 1, 2, 3A, 3B, 4A, 4B, 5A, 5B, and/or 5C, and/or the electronic device of FIG. 6. Operations of FIG. 7 may be executed by the processor 120 of FIGS. 1 and/or 2.

Referring to FIG. 7, in operation 701, according to an embodiment, the electronic device may obtain an image by a camera. The electronic device may identify, based on the image obtained by the camera, an external object (e.g., the first external object 510 of FIGS. 5A to 5C and/or the second external object 520 of FIGS. 5A to 5C) viewable through a display. The electronic device may identify a direction from the electronic device to the external object. The electronic device may identify a position of the external object in the image. The electronic device may identify, based on identifying the position of the external object, an area including the external object. For example, the area including the external object may be referred to as a bounding box.

In operation 703, according to an embodiment, the electronic device may identify a direction from the electronic device to the external object. The electronic device may control, based on the direction, a microphone array. The electronic device may obtain, by controlling the microphone array, an acoustic signal corresponding to the direction. The electronic device may obtain, by controlling the microphone array, an acoustic signal generated by the external object. The electronic device may form a beam having an azimuth angle corresponding to the identified position. The electronic device may obtain, based on the formed beam, the acoustic signal.

In operation 705, according to an embodiment, the electronic device may obtain the acoustic signal. The electronic device may display, based on the obtained acoustic signal, a visual object to adjust a volume of the acoustic signal in the display. The electronic device may display, the visual object to adjust the volume of the acoustic signal in the display based on the position of the external object identified in the image. For example, the visual object may be referred to as the first visual objects 512, 522, and 532 of FIG. 5B and/or the visual object 540 of FIG. 5C. For example, the electronic device may display, based on an input for the visual object, a second visual object (e.g., the visual objects 513, 523, and 533, such as the slider of FIG. 5B) such as a slider in association with the visual object.

In operation 707, according to an embodiment, the electronic device may output, in response to an input to adjust the volume received based on the visual object, an audio associated with the acoustic signal through a speaker (e.g., the speaker 210 of FIG. 2).

For example, the electronic device may superimpose a tuning signal corresponding to the acoustic signal on the acoustic signal, in response to an input for increasing the volume of the acoustic signal. The electronic device may obtain an audio signal, based on superimposing of the acoustic signal and the tuning signal. The electronic device may output the audio signal obtained based on the acoustic signal and the tuning signal through the speaker.

According to an embodiment, the electronic device may receive the input to adjust the volume of the acoustic signal, based on the visual object such as the slider. For example, the electronic device may receive the input for increasing the volume of the acoustic signal. The electronic device may obtain, in response to the input for increasing the volume the acoustic signal, the audio signal having a phase corresponding to a phase of the acoustic signal. For example, the audio signal may include a signal superimposed with the tuning signal having a phase corresponding to the acoustic signal.

For example, the electronic device may receive the input for decreasing the volume of the acoustic signal. In response to the input for decreasing the volume of the acoustic signal, the electronic device may obtain an audio signal, which is corresponding to the acoustic signal, having the preset difference with respect to the phase of the acoustic signal. The audio signal may be obtained based on a tuning signal, which is corresponding to the acoustic signal, having the phase of a preset difference (about 180°) with respect to the phase of the acoustic signal. For example, the electronic device may superimpose the acoustic signal and the tuning signal, which is corresponding to the acoustic signal, having the phase of the preset difference with respect to the phase of the acoustic signal. The electronic device may obtain the audio signal, based on superimposing the acoustic signal and the tuning signal. For example, in response to the input for decreasing the volume of the acoustic signal, the electronic device may superimpose the tuning signal, which is corresponding to the acoustic signal, having the preset difference with respect to the phase of the acoustic signal on the acoustic signal. The electronic device may obtain the audio signal based on superimposing of the acoustic signal and the tuning signal. The electronic device may output the audio signal obtained based on superimposing of the acoustic signal and the tuning signal through the speaker.

As described above, according to an embodiment, the electronic device may obtain the acoustic signal generated by the external object. The electronic device may generate, based on obtaining the acoustic signal, the tuning signal to adjust the volume of the acoustic signal. The electronic device may superimpose the acoustic signal and the tuning signal. The electronic device may obtain the audio signal based on superimposing of the acoustic signal and the tuning signal. The electronic device may output the audio signal through the speaker. The electronic device may enhance a user experience of the electronic device by outputting the audio signal.

As described above, according to an embodiment, an electronic device 101 may comprise a display 230, a camera 240, a speaker 210, a microphone array 220 including a plurality of microphones, and a processor 120. The processor 120 may identify, based on an image obtained by the camera 240, an external object 510 viewable through the display 230. The processor 120 may obtain, by controlling the microphone array 220 based on a direction of the identified external object, an acoustic signal corresponding to the direction. The processor 120 may display, based on the acoustic signal, a visual object to adjust a volume of the acoustic signal in the display 230 based on a position of the external object identified in the image. The processor 120 may output, in response to an input to adjust the volume received based on the visual object, an audio signal associated with the acoustic signal through the speaker 210.

According to an embodiment, the processor 120 may obtain, based on a beam having an azimuth angle corresponding to the identified position and formed by the microphone array 220, the acoustic signal.

According to an embodiment, the electronic device 101 may comprise communication circuitry 250. The processor 120 may, in a state connected with a second external object 520 through the communication circuitry 250 that is different from the external object 510 which is a first external object 510, display, in association with the second external object 520 viewable through the display 230, a second visual object to control the second external object 520 that is different from the visual object which is a first visual object.

According to an embodiment, the processor 120 may transmit, in response to an input to adjust a volume of the second external object 520 received based on the second visual object, a control signal to adjust a volume of another audio signal outputted by the second external object 520, to the second external object 520 through the communication circuitry 250.

According to an embodiment, the processor 120 may display the visual object superimposed on at least a portion of an area where the external object 510 is identified.

According to an embodiment, the processor 120 may display the second visual object superimposed on at least a portion of an area where the second external object 510 is identified.

According to an embodiment, the processor 120 may output, in response to the input for increasing the volume, the audio signal having a phase corresponding to a phase of the acoustic signal.

According to an embodiment, the processor 120 may output, in response to the input for decreasing the volume, the audio signal, which is corresponding to the acoustic signal, having a preset difference with respect to a phase of the acoustic signal.

According to an embodiment, the electronic device 101 may comprise communication circuitry 250. The processor 120 may output a second audio signal different from the audio signal which is a first audio signal that is associated with a virtual object displayed based on information transmitted through the communication circuitry 250 from an external electronic device 101 different from the electronic device 101. The processor 120 may display a third visual object to control the second audio signal associated with the virtual object that is different from the visual object which is a first visual object.

As described above, according to an embodiment, a method of an electronic device 101 may comprise identifying, based on an image obtained by a camera 240, an external object 510 viewable through a display 230. The method of the electronic device 101 may comprise obtaining, by controlling a microphone array 220 based on a direction of the identified external object, an acoustic signal corresponding to the direction. The method of the electronic device 101 may comprise displaying, based on the acoustic signal, a visual object to adjust a volume of the acoustic signal in the display 230 based on a position of the external object identified in the image. The method of the electronic device 101 may comprise outputting, in response to an input to adjust the volume received based on the visual object, an audio signal associated with the acoustic signal through a speaker 210.

According to an embodiment, the method of the electronic device 101 may comprise obtaining, based on a beam having an azimuth angle corresponding to the identified position and formed by the microphone array 220, the acoustic signal.

According to an embodiment, the method of the electronic device 101 may comprise, in a state connected with a second external object 520 through the communication circuitry 250 that is different from the external object 510 which is a first external object 510, displaying, in association with the second external object 520 viewable through the display 230, a second visual object to control the second external object 520 that is different from the visual object which is a first visual object.

According to an embodiment, the method of the electronic device 101 may comprise transmitting, in response to an input to adjust a volume of the second external object 520 received based on the second visual object, a signal to adjust a volume of another audio signal outputted by the second external object 520, to the second external object 520 through the communication circuitry 250.

According to an embodiment, the method of the electronic device 101 may comprise displaying the visual object superimposed on at least a portion of an area where the external object 510 is identified.

According to an embodiment, the method of the electronic device 101 may comprise displaying the second visual object superimposed on at least a portion of an area where the second external object 520 is identified.

According to an embodiment, the method of the electronic device 101 may comprise outputting, in response to the input for increasing the volume, the audio signal having a phase corresponding to a phase of the acoustic signal.

According to an embodiment, the method of the electronic device 101 may comprise outputting, in response to the input for decreasing the volume, the audio signal, which is corresponding to the acoustic signal, having a preset difference with respect to a phase of the acoustic signal.

According to an embodiment, the method of the electronic device 101 may comprise outputting a second audio signal different from the audio signal which is a first audio signal that is associated with a virtual object displayed based on information transmitted through communication circuitry 250 from an external electronic device 101 different from the electronic device 101. The method of the electronic device 101 may comprise displaying a third visual object to control the second audio signal associated with the virtual object that is different from the visual object which is a first visual object.

As described above, according to an embodiment, a computer-readable storage medium storing one or more programs, wherein the one or more programs, when executed by a processor 120 of an electronic device 101, may cause the processor 120 of the electronic device 101 to identify, based on an image obtained by a camera 240, an external object 510 viewable through a display 230. The one or more programs, when executed by the processor 120 of the electronic device 101, may cause the processor 120 of the electronic device 101 to obtain, by controlling a microphone array 220 based on a direction of the identified external object, an acoustic signal corresponding to the direction. The one or more programs, when executed by the processor 120 of the electronic device 101, may cause the processor 120 of the electronic device 101 to display, based on the acoustic signal, a visual object to adjust a volume of the acoustic signal in the display 230 based on a position of the external object identified in the image. The one or more programs may cause the processor 120 of the electronic device 101 to output, in response to an input to adjust the volume received based on the visual object, an audio signal associated with the acoustic signal through a speaker 210.

According to an embodiment, the one or more programs, when executed by the processor 120 of the electronic device 101, may cause the processor 120 of the electronic device 101 to obtain, based on a beam having an azimuth angle corresponding to the identified position and formed by the microphone array 220, the acoustic signal.

According to an embodiment, the one or more programs, when executed by the processor 120 of the electronic device 101, may cause the processor 120 of the electronic device 101 to, in a state connected with a second external object 520 through communication circuitry 250 that is different from the external object 510 which is a first external object 510, display, in association with the second external object 520 viewable through the display 230, a second visual object to control the second external object 520 that is different from the visual object which is a first visual object.

According to an embodiment, the one or more programs, when executed by the processor 120 of the electronic device 101, may cause the processor 120 of the electronic device 101 to transmit, in response to an input to adjust a volume of the second external object 520 received based on the second visual object, a signal to adjust a volume of another audio signal outputted by the second external object 520, to the second external object 520 through the communication circuitry 250.

According to an embodiment, the one or more programs, when executed by the processor 120 of the electronic device 101, may cause the processor 120 of the electronic device 101 to display the visual object superimposed on at least a portion of an area where the external object 510 is identified.

According to an embodiment, the one or more programs, when executed by the processor 120 of the electronic device 101, may cause the processor 120 of the electronic device 101 to display the second visual object superimposed on at least a portion of an area where the second external object 520 is identified.

According to an embodiment, the one or more programs, when executed by the processor 120 of the electronic device 101, may cause the processor 120 of the electronic device 101 to output, in response to the input for increasing the volume, the audio signal having a phase corresponding to a phase of the acoustic signal.

According to an embodiment, the one or more programs, when executed by the processor 120 of the electronic device 101, may cause the processor 120 of the electronic device 101 to output, in response to the input for decreasing the volume, the audio signal, which is corresponding to the acoustic signal, having a preset difference with respect to a phase of the acoustic signal.

According to an embodiment, the one or more programs, when executed by the processor 120 of the electronic device 101, may cause the processor 120 of the electronic device 101 to output a second audio signal different from the audio signal, which is a first audio signal, that is associated with a virtual object displayed based on information transmitted through the communication circuitry 250 from an external electronic device 101 different from the electronic device 101. The one or more programs, when executed by the processor 120 of the electronic device 101, may cause the processor 120 of the electronic device 101 to display a third visual object to control the second audio signal associated with the virtual object that is different from the visual object which is a first visual object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a camera;
a speaker;
a microphone array including a plurality of microphones; and
a processor, wherein the processor is configured to:
identify, based on an image obtained by the camera, an external object viewable through the display;
obtain, by controlling the microphone array based on a direction of the identified external object, an acoustic signal corresponding to the direction;
display, based on the acoustic signal, a visual object to adjust a volume of the acoustic signal in the display based on a position of the external object identified in the image; and
output, in response to an input to adjust the volume received based on the visual object, an audio signal associated with the acoustic signal through the speaker.

2. The electronic device of claim 1, wherein the processor is configured to:
obtain, based on a beam having an azimuth angle corresponding to the identified position and formed by the microphone array, the acoustic signal.

3. The electronic device of any one of claim 1 to claim 2, further comprising communication circuitry,
wherein the processor is configured to:
in a state connected with a second external object through the communication circuitry that is different from the external object which is a first external object, display, in association with the second external object viewable through the display, a second visual object to control the second external object that is different from the visual object which is a first visual object.

4. The electronic device of claim 3, wherein the processor is configured to:
transmit, in response to an input to adjust a volume of the second external object received based on the second visual object, a control signal to adjust a volume of another audio signal outputted by the second external object, to the second external object through the communication circuitry.

5. The electronic device of any one of claim 1 to claim 4, wherein the processor is configured to:
display the visual object superimposed on at least a portion of an area where the external object is identified.

6. The electronic device of any one of claim 3 to claim 5, wherein the processor is configured to:
display the second visual object superimposed on at least a portion of an area where the second external object is identified.

7. The electronic device of any one of claim 1 to claim 6, wherein the processor is configured to:
output, in response to the input for increasing the volume, the audio signal having a phase corresponding to a phase of the acoustic signal.

8. The electronic device of any one of claim 1 to claim 7, wherein the processor is configured to:
output, in response to the input for decreasing the volume, the audio signal, which is corresponding to the acoustic signal, having a preset difference with respect to a phase of the acoustic signal.

9. The electronic device of any one of claim 1 to claim 8, further comprising, communication circuitry,
wherein the processor is configured to:
output a second audio signal different from the audio signal which is a first audio signal that is associated with a virtual object displayed based on information transmitted through the communication circuitry from an external electronic device different from the electronic device; and
display a third visual object to control the second audio signal associated with the virtual object that is different from the visual object which is a first visual object.

10. A method of an electronic device comprising:
identifying, based on an image obtained by a camera, an external object viewable through a display;
obtaining, by controlling a microphone array based on a direction of the identified external object, an acoustic signal corresponding to the direction;
displaying, based on the acoustic signal, a visual object to adjust a volume of the acoustic signal in the display based on a position of the external object identified in the image; and
outputting, in response to an input to adjust the volume received based on the visual object, an audio signal associated with the acoustic signal through a speaker.

11. The method of the electronic device of claim 10, comprising:
obtaining, based on a beam having an azimuth angle corresponding to the identified position and formed by the microphone array, the acoustic signal.

12. The method of the electronic device of any one of claim 10 to claim 11, comprising:
in a state connected with a second external object through the communication circuitry that is different from the external object which is a first external object, displaying, in association with the second external object viewable through the display, a second visual object to control the second external object that is different from the visual object which is a first visual object.

13. The method of the electronic device of claim 12, comprising:
transmitting, in response to an input to adjust a volume of the second external object received based on the second visual object, a signal to adjust a volume of another audio signal outputted by the second external object, to the second external object through the communication circuitry.

14. The method of the electronic device of any one of claim 10 to claim 13, comprising:
displaying the visual object superimposed on at least a portion of an area where the external object is identified.

15. The method of the electronic device of any one of claim 12 to claim 14, further comprising:
displaying the second visual object superimposed on at least a portion of an area where the second external object is identified.
